# EUROPEAN PATENT APPLICATION

(11) **EP 1 816 348 A1**
(43) Date of publication of application: **08.08.2007**
(21) Application number: 05812122.9
(22) Date of filing: 14.11.2005
(51) Int. Cl.: F03D 9/00, F03D 9/02

(54) **WIND-AIR ENGINE, NAMELY ENGINE USING WIND AND AIR PRESSURE AS ENERGY OT REPLACE FUEL**

(30) Priority: 22.11.2004 CN 200410091154; 16.08.2005 CN 200510090760; 02.11.2005 CN 200510117451
(71) Applicant: Cong, Yang, Shenzhen, Guangdong 518034 (CN)
(72) Inventor: Cong, Yang, Shenzhen, Guangdong 518034 (CN)
(74) Representative: Ketelaars, Maarten F.J.M.
(86) International application number: PCT/CN2005/001911
(87) International publication number: WO 2006/053484

(57) **Abstract**

A wind-air engine namely an engine using wind and air pressure as energy to replace fuel is provided; The wind-air engine relates to an engine installed in large, medium or small size cargo or passenger vehicles having steering wheels, railway trains, subway trains moving on land, marine travel vehicle, aero space travel vehicle and all other motor vehicles that move at a speed; The wind-air engine includes a main body of the wind-air engine, a controller for HPCA automatic intermittent burst jet acceleration of the wind-air engine, and a deceleration and brake pressurizing device of a motor vehicle equipped with the wind-air engine; The wind-air engine is not restricted by natural weather, ambient or wind conditions, and uses HPCA stored therein to be started and accelerated to generate power output, the power drives the motor vehicle equipped with the wind-air engine moves at a speed and the wind force and wind resistance airflow encountered are transformed into mechanical kinetic energy; Then the mechanical kinetic energy and inertia when the motor vehicle equipped with the wind-air engine moves at a speed are output, so as to regenerate HPCA and convert it into mechanical power; The advantage lies in the feature of recycling the wind force and wind resistance kinetic power encountered when the engine runs at a speed and the regeneration HPCA, and converting them into mechanical kinetic power;

## Description

### Field of the Invention

The present invention relates to an engine installed in large, medium or small size cargo or passenger vehicles having steering wheels, railway trains, subway trains moving on land, marine travel vehicle, aero space travel vehicle and all other motor vehicles that move at a speed.

### Description of Related Art

Engines powered by fuels consume a large amount of fuels, and discharge a large amount of exhaust gases and hot gases, which lead to environment pollution. In order to save fuel energy source and protect the global environment, an engine that does not consume fuel, discharges no exhaust gases and hot gases, causes no pollution, and uses wind and air pressure as energy to replace the fuel is required. Presently, all the published techniques that convert wind force into mechanical kinetic energy utilize wind force restricted by natural weather, ambient and wind conditions, to impel impellers to operate and generate the mechanical kinetic energy. These techniques are utilized for machines that do not move at a speed. Thus, the machines cannot freely control the wind force and wind resistance airflow generated after the machines are self-started to move at a speed to convert the airflow into the mechanical kinetic energy to be used. Instead, the techniques can only utilize the limited wind force restricted by natural weather, ambient and wind conditions at fixed spots to impel the impellers to run, so as to generate and use the mechanical kinetic energy.

The essential difference between the present invention and the prior art described above lies in that the present invention is not restricted by natural weather, ambient or wind conditions. High-pressure compressed air (HPCA) is stored in a HPCA regeneration, storage and supply system of the wind-air engine, and is freely controlled by a motor vehicle equipped with the wind-air engine. Thus, the present invention has the ability to convert wind force and wind resistance airflow, encountered when the vehicle moves at a speed after being self-started, into mechanical kinetic energy to reuse.

The wind-air engine of the present invention uses the HPCA stored in an air tank of the HPCA regeneration, storage and supply system of the wind-air engine, such that the motor vehicle equipped with the wind-air engine can freely control the wind force and wind resistance airflow encountered when the vehicle moves at a speed after being self-started, and direct them to enter from an outer edge of a directional trunk inlet of the wind-air engine, then to pass through an inner edge of the directional trunk inlet of the wind-air engine which is 1- 30 times smaller than the outer edge of the directional trunk inlet of the wind-air engine at a high speed. Thus, the wind force and wind resistance airflow will generate HPCA airflow at the inner edge of the directional trunk inlet of the wind-air engine and in the impeller chambers, so as to impel the impellers of the wind-air engine to operate at a high speed to output power, which drives the motor vehicle equipped with the wind-air engine to move at a speed. Meanwhile, inertia power of the motor vehicle equipped with the wind-air engine when moving at a speed is used, and the wind-air engine is accelerated by a control system for HPCA automatic intermittent burst jet acceleration, such that the power generated, when the wind-air engine is accelerated, is output as well. This starts the HPCA compressor of the HPCA regeneration, storage and supply system of the wind-air engine to continuously generate regeneration HPCA. The regeneration HPCA is then stored in the HPCA tank of the HPCA regeneration, storage and supply system of the wind-air engine, and is supplied to the control system for HPCA automatic intermittent burst jet acceleration of the wind-air engine for recycling and re-acceleration. Thus, the wind-air engine can be continuously accelerated and can generate power, which drives the wind-air engine of the motor vehicle equipped with the wind-air engine having normal operation function and capable of freely controlling and recycling the wind force and wind resistance when the vehicle moves at a speed after being self-started, and recycling the regeneration HPCA as the power source.

The present invention also provides a controller for HPCA automatic intermittent burst jet acceleration of the wind-air engine, which uses HPCA airflow generated by automatic intermittent burst and jet of the regeneration HPCA stored in the wind-air engine, to drive the impellers, including a plurality of sets of impellers, of the wind-air engine to be accelerated to generate the power. The HPCA automatic intermittent burst jet acceleration function enables the motor vehicle equipped with the wind-air engine to move over a long distance for a long time at a low speed or to be frequently decelerated, idled and re-accelerated. It also enables the wind-air engine to be continuously started normally, accelerated, idled, or continuously accelerated to generate power when the wind force and wind resistance generated encountered by the directional trunk inlet of the wind-air engine as the motor vehicle moves at a speed reduces, or when the impellers are not impelled to operate to generate power because the vehicle does not move to generate the wind force or wind resistance and convert it into airflow driving forces.

When the motor vehicle equipped with the wind-air engine needs to frequently be decelerated, idled or re-accelerated, the quantity of the consumed HPCA exceeds the quantity of the HPCA supplemented automatically by the HPCA regeneration, storage and supply system of the wind-air engine when the motor vehicle equipped with the wind-air engine operates normally. Therefore, the rated quantity of the HPCA required to restart the motor vehicle equipped with the wind-air engine is affected. In order to supplement the excessively consumed quantity of the HPCA storage when the motor vehicle equipped with the wind-air engine is frequently decelerated, idled or re-accelerated, and to ensure the rated quantity of the HPCA required to restart the wind-air engine, the present invention provides a deceleration and brake pressurizing device of the motor vehicle equipped with the wind-air engine. The deceleration and brake pressurizing device achieves the function of the deceleration and brake of the motor vehicle equipped with the wind-air engine, and meanwhile uses the output of the deceleration inertia power to start the HPCA compressor of the HPCA regeneration, storage and supply system of the motor vehicle equipped with the wind-air engine, in order to transform the inertia power before the motor vehicle equipped with the wind-air engine decelerates and brakes into a pressurizing energy through the deceleration and brake pressurizing device of the motor vehicle equipped with the wind-air engine, and regenerate the HPCA to be stored. Thus, the quantity of the consumed HPCA when the motor vehicle equipped with the wind-air engine is frequently decelerated, braked, stopped and restarted balances with the quantity of the regeneration HPCA generated by transforming the inertia power output by the motor vehicle equipped with the wind-air engine. This ensures the rated quantity of the HPCA required to frequently restart the motor vehicle equipped with the wind-air engine.

### Summary of the Invention

The present invention provides a wind-air engine that does not consume fuel energy and discharges no exhaust gases and hot gases. The engine is not restricted by the natural weather, ambient and wind conditions. It uses HPCA regenerated and stored by the wind-air engine, and converts wind force and wind resistance airflow encountered by a moving motor vehicle equipped with the wind-air engine when moving at a speed after self-start into a power source. The present invention also provides a control system for HPCA automatic intermittent burst jet acceleration of the wind-air engine that enables the wind-air engine to be accelerated continuously to generate power. In addition, the present invention provides a deceleration and brake pressurizing device of the motor vehicle equipped with the wind-air engine that recycles the inertia power encountered when the motor vehicle equipped with the wind-air engine moving at a speed frequently decelerates and brakes, and transforms the inertia power into kinetic power of the HPCA to be reused.

The objects of the present invention are achieved with the following technical schemes.

A wind-air engine includes the following mechanisms and systems. The wind-air engine includes outer edges of directional trunk inlets, inner edges of the directional trunk inlets, impeller chambers, impellers, impeller flywheels, a left impeller main shaft auxiliary power conical gear, a right impeller main shaft auxiliary power conical gear, a central main power output gear box, and air outlets; a HPCA regeneration, storage and supply system of the wind-air engine, including an air tank, a HPCA compressor, and a conical gear for transmitting the HPCA compressor; an air-jet system for start and acceleration of the wind-air engine, including a central controller for HPCA start and acceleration, a distributor, a plurality of sets of air-jet pipes connected with the distributor, a plurality of sets of directional air-jet nozzles connected with the distributor, a central controller for HPCA automatic intermittent burst jet acceleration, a distribution controller, a plurality of sets of air-jet pipes connected with the distribution controller, a plurality of sets of directional air-jet nozzles connected with the distribution controller, a conical gear for transmitting the distribution controller, cam shafts and a cam valve set connected with the distribution controller, a central HPCAjet pipe connected with the controller for HPCA start and acceleration, and a central HPCA jet pipe connected with the controller for HPCA automatic intermittent burst jet acceleration; a deceleration and brake pressurizing system of the wind-air engine, including a deceleration and brake pressurizing device, a brake disk internal gear transmission mechanism of the deceleration and brake pressurizing device, and a high-load air compressor connected with the deceleration and brake pressurizing device.

The wind-air engine of the present invention is an engine installed in large, medium or small size cargo or passenger vehicles having steering wheels, railway trains, subway trains moving on land, marine travel vehicle, aero space travel vehicle and all other motor vehicles that move at a speed. The wind-air engine is not restricted by natural weather, ambient and wind conditions. It uses the HPCA that can be controlled freely and stored in the HPCA regeneration, storage and supply system of the wind-air engine to achieve the self-start of the wind-air engine to output power. The wind force and wind resistance airflow generated, when the motor vehicle equipped with the wind-air engine moves at a speed, enter from directional trunk inlets of the wind-air engine, which impel the impellers of the wind-air engine to operate and obtain the mechanical kinetic energy, and output the mechanical kinetic energy. The inertia power encountered when the motor vehicle equipped with the wind-air engine is driven by the wind-air engine to move at a speed starts the HPCA compressor of the HPCA regeneration, storage and supply system of the wind-air engine to work continuously, thereby generating the regeneration HPCA to be stored, and converting the HPCA into the mechanical kinetic energy. When the wind force and wind resistance encountered by the moving vehicle after being self-started and the regeneration HPCA is recycled and used as the power source, the stored HPCA is used to start the wind-air engine to be accelerated to output power, so as to drive the motor vehicle equipped with the wind-air engine. The wind force and wind resistance airflow encountered by the moving vehicle after being self-started enter from the outer edge of the directional trunk inlet of the wind-air engine, and pass through the inner edge of the directional trunk inlet of the wind-air engine, which is 1-30 times smaller than the outer edge of the directional trunk inlet, at a high speed. Thus, the wind force and wind resistance airflow generate HPCA airflow at the inner edge of the directional trunk inlet of the wind-air engine and in the impeller chambers. The HPCA airflow impels the impellers of the wind-air engine to rotate at a high speed to generate and output power, so as to drive the motor vehicle equipped with the wind-air engine to move at a speed. Meanwhile, the inertia power encountered when the motor vehicle equipped with the wind-air engine moves at a speed and the power generated when the wind-air engine is accelerated to operate by the controller for HPCA automatic intermittent burst jet acceleration are output at the same time, so as to start the HPCA compressor of the HPCA regeneration, storage and supply system of the wind-air engine to work, and generate the regeneration HPCA continuously, which is stored in HPCA tank of the HPCA regeneration, storage and supply system of the wind-air engine, for being supplied to the central control system for HPCA automatic intermittent burst jet acceleration of the wind-air engine to be recycled for re-acceleration. Thus, the impellers of the wind-air engine can be accelerated to operate continuously to generate power, which drives the wind-air engine of the motor vehicle equipped with the wind-air engine having normal operation function and capable of freely controlling and recycling the wind force and wind resistance when the vehicle moves at a speed after being self-started, and recycling the regeneration HPCA as the power source.

In order to more rapidly and more powerfully start and operate the impellers of the wind-air engine, a design of grid partition is adopted with regard to the blades of the impellers of the wind-air engine of the present invention, i.e., the blades of the impellers of the wind-air engine are partitioned into X minimum units of impeller chambers, such that the HPCA airflow jetted from the plurality of sets of directional air-jet nozzles of the HPCA jet system of the wind-air engine is more concentrated on the X minimum units of impeller chambers partitioned from the blades, so as to generate the most powerful and most concentrated HPCA airflow, and impel the impellers of the wind-air engine to be accelerated and operates more rapidly and more powerfully to generate power.

In the present invention, the wind-air engine, namely the engine using the wind and air pressure as energy to replace fuel, is accelerated by the control system for HPCA automatic intermittent burst jet acceleration. When the wind-air engine is accelerated to generate power, as it is accelerated by the control system for HPCA automatic intermittent burst jet acceleration that effectively saves the HPCA and effectively generates the HPCA burst jet forces, the air-jet time is shortened significantly, which greatly saves the quantity of the HPCA stored in the air tank of the HPCA regeneration, storage and supply system of the wind-air engine and the quantity of the HPCA generated by the continuously operating HPCA compressor of the HPCA regeneration, storage and supply system of the wind-air engine. Thus, the quantity of the stored HPCA remains at a high pressure, so as to meet the requirement on the quantity of the HPCA that is required when the control system for HPCA automatic intermittent burst jet acceleration of the wind-air engine is started and accelerated to operate and is capable of generating high burst jet forces, so as to convert into greater mechanical kinetic energy. Thereby, it is ensured that the wind-air engine is started and accelerated to generate power normally. Meanwhile, the power generated when the wind-air engine is accelerated is output to start the HPCA compressor of the HPCA regeneration, storage and supply system of the wind-air engine to work continuously, so as to recycle the regeneration HPCA, such that the HPCA compressor of the HPCA regeneration, storage and supply system of the wind-air engine works continuously. The quantity of the recycled regeneration HPCA is greater than the quantity of the consumed HPCA required by the acceleration work of the control system for HPCA automatic intermittent burst jet acceleration of the wind-air engine. Thus, the quantity of the HPCA required when the wind-air engine is accelerated by the control system for HPCA automatic intermittent burst jet acceleration is guaranteed, and the wind-air engine is accelerated to generate power. The present invention ensures that the wind-air engine continuously runs normally to generate power output to drive the motor vehicle equipped with the wind-air engine to move continuously when the motor vehicle equipped with the wind-air engine moves over a long distance for a long time at a low speed or needs to be frequently decelerated, idled and re-accelerated, such that the wind force and wind resistance encountered by the directional trunk inlet of the wind-air engine when the motor vehicle runs at a speed reduces, or when the impellers are not impelled to operate to generate power due to the vehicle does not move to generate the wind force or wind resistance and convert it into airflow driving forces.

The technical schemes are realized as follows. The HPCA stored in the air tank of the HPCA regeneration, storage and supply system of the wind-air engine is used to turn on the central controller for HPCA start and acceleration disposed in the air tank of the HPCA regeneration, storage and supply system of the wind-air engine, such that the HPCA stored in the air tank of the HPCA regeneration, storage and supply system air tank of the wind-air engine is jetted and passes through the distributor connected with the controller for HPCA start and acceleration of the wind-air engine, so as to distribute the HPCA to the plurality of sets of air-jet pipes connected with the distributor and the controller for HPCA start and acceleration. Then, HPCA airflow is jetted from the plurality of sets of directional air-jet nozzles in communication with the distributor and the controller for HPCA start and acceleration of the wind-air engine, so as to impel the impellers of the wind-air engine, such that the impellers of the wind-air engine are started and accelerated to operate to generate power. The power is then output by the left impeller main shaft auxiliary power conical gear of the wind-air engine. The left impeller main shaft auxiliary power conical gear is connected with and starts the conical gear for transmitting the distribution controller connected with the controller for HPCA automatic intermittent burst jet acceleration of the wind-air engine, so as to drive the cam shafts and cam valve set connected with the distribution controller and the controller for HPCA automatic intermittent burst jet acceleration of the wind-air engine to be started, and to turn on the central controller for HPCA automatic intermittent burst jet acceleration of the wind-air engine at the same time. Then the HPCA is jetted and supplied to the distribution controller connected with the controller for HPCA automatic intermittent burst jet acceleration of the wind-air engine, and the cam shafts and cam valve set connected with the distribution controller and the controller for HPCA automatic intermittent burst jet acceleration of the wind-air engine continue to work. The cams of the cam shafts and cam valve set connected with the distribution controller and the controller for HPCA automatic intermittent burst jet acceleration of the wind-air engine synchronously open or close a plurality of sets of valves, such that the plurality of sets of valves are synchronously opened or closed to generate synchronous automatic intermittent burst HPCA airflow. Alternatively, the cams of the cam shafts and cam valve set connected with the distribution controller and the controller for HPCA automatic intermittent burst jet acceleration of the wind-air engine open or close a plurality of sets of valves in distribution, such that the plurality of sets of valves are opened or closed in distribution to generate distributional automatic intermittent burst HPCA airflow. The HPCA airflow is distributed to the plurality of sets of air-jet pipes connected with the distribution controller and the controller for HPCA automatic intermittent burst jet acceleration of the wind-air engine, then the automatic intermittent burst HPCA airflow jetted from the plurality of directional air-jet nozzles connected with the distribution controller and the controller for HPCA automatic intermittent burst jet acceleration of the wind-air engine impels the plurality of sets of impellers of the wind-air engine to be accelerated to operate, such that the flywheels of the plurality of sets of impellers of the wind-air engine impeller are accelerated to operate accordingly to generate inertia forces, making the wind-air engine output powerful torque. The right impeller main shaft auxiliary power conical gear of the wind-air engine outputs the power, and the right impeller main shaft auxiliary power conical gear is connected with and starts the conical gear for transmitting the HPCA compressor of the HPCA regeneration, storage and supply system of the wind-air engine, so as to start the HPCA compressor of the HPCA regeneration, storage and supply system of the wind-air engine to work continuously, thereby generating the HPCA, which is supplemented to and stored in the air tank of the HPCA regeneration, storage and supply system of the wind-air engine, obtaining the rated quantity of the HPCA that the central control system for HPCA start and acceleration of the wind-air engine required to start the acceleration and the rated quantity of the HPCA that the central control system for HPCA automatic intermittent burst jet acceleration of the wind-air engine requires to start the acceleration, and ensuring that the wind-air engine is continuously accelerated to generate power.

It is important to obtain the rated quantity of the HPCA meeting the technical requirements of air-jet of the plurality of sets of directional air-jet nozzles connected with the distributor and the controller for HPCA start and acceleration of the wind-air engine. It is also important to obtain the rated quantity of the HPCA meeting the technical requirements of HPCA automatic intermittent burst jet by the plurality of sets of directional air-jet nozzles connected with the distribution controller and the controller for HPCA automatic intermittent burst jet acceleration of the wind-air engine. To achieve these purpose, the present invention adopts the design that the diameter of a central HPCA jet pipe connected with the central controller for HPCA start and acceleration of the wind-air engine is several times greater than the total diameter of the plurality of sets of directional air-jet nozzles connected with the distributor and the central controller for HPCA start and acceleration of the wind-air engine. In addition, a diameter of a central HPCA jet pipe connected with the central controller for HPCA automatic intermittent burst jet acceleration of the wind-air engine is several times greater than the total diameter of the plurality of sets of directional air-jet nozzles connected with the distribution controller and the controller for HPCA automatic intermittent burst jet acceleration of the wind-air engine respectively.

In order to make the impellers of the wind-air engine be directionally started and accelerated to operate to generate power, the present invention adopts a design that the plurality of sets of directional air-jet nozzles is connected with the distributor and the controller for HPCA start and acceleration of the wind-air engine. In addition, the plurality of sets of directional air-jet nozzles is connected with the distribution controller and the controller for HPCA automatic intermittent burst jet acceleration of the wind-air engine, such that directional air jet function is achieved.

In order to overcome or reduce the frictional resistance between the valve stem heads of the cam shafts and the cam valve set connected with the distribution controller and the controller for HPCA automatic intermittent burst jet acceleration of the wind-air engine , and the cams of the cam shafts and the cam valve set connected with the distribution controller and the controller for HPCA automatic intermittent burst jet acceleration of the wind-air engine when the cams of the cam shafts and the cam valve set connected with the distribution controller and the controller for HPCA automatic intermittent burst jet acceleration of the wind-air engine operate to open or close the valves of the cam shafts and the cam valve set, the present invention adds sliding balls to the valve stem heads of the cam shafts and the cam valve set connected with the distribution controller and the controller for HPCA automatic intermittent burst jet acceleration of the wind-air engine. In order to make the sliding balls at the valve stem heads of the cam shafts and the cam valve set connected with the distribution controller and the controller for HPCA automatic intermittent burst jet acceleration of the wind-air engine slide freely, the present invention adds a lubrication oil passage on the valve stem heads of the cam shafts and the cam valve set connected with the distribution controller and the controller for HPCA automatic intermittent burst jet acceleration of the wind-air engine, such that lubrication oil in a lubrication oil chamber of the cam shafts and the cam valve set connected with the distribution controller and the controller for HPCA automatic intermittent burst jet acceleration of the wind-air engine flows onto surfaces of the sliding balls at the valve stem heads of the cam shafts and the cam valve set connected with the distribution controller and the controller for HPCA automatic intermittent burst jet acceleration of the wind-air engine through the lubrication passage, so as to realize the lubrication, reduce the frictional resistance, improve the operating speed of the wind-air engine, and generate greater output torque.

When the motor vehicle equipped with the wind-air engine needs to be frequently decelerated, braked, stopped or restarted, the HPCA regenerated by the HPCA compressor in the HPCA regeneration, storage and supply system of the wind-air engine when the motor vehicle equipped with the wind-air engine moves normally will be consumed excessively. This affects the rated quantity of the HPCA required to restart the motor vehicle equipped with the wind-air engine. In order to supplement the quantity of the excessively consumed HPCA when the vehicle equipped with the wind-air engine is frequently decelerated, braked, stopped or restarted, and to ensure the rated quantity of the HPCA required to restart the wind-air engine, the present invention provides a wind-air engine deceleration and brake pressurizing device that recycles the inertia power of the motor vehicle equipped with the wind-air engine moving at a speed when it is decelerated and braked frequently, and transforms the inertia power into the HPCA kinetic power to be reused.

The technical scheme is realized as follows. A pedal of the deceleration and brake pressurizing device of the motor vehicle equipped with the wind-air engine is stepped down to change from a position of free travel of the deceleration and brake pressurizing device of the wind-air engine to a position of deceleration and pressurization travel of the deceleration and brake pressurizing device of the wind-air engine. A hydraulic master pump of the deceleration and brake pressurizing device of the wind-air engine starts to work, and functions on a hydraulic working pump of a clutch driven disk of the deceleration and brake pressurizing device of the wind-air engine. This pushes the clutch driven disk of the deceleration and brake pressurizing device of the wind-air engine to combine with a clutch driving disk of the deceleration and brake pressurizing device of the wind-air engine, such that the inertia power of motor vehicle equipped with the wind-air engine when being decelerated is output by a brake disk internal gear transmission mechanism of the brake of the deceleration and brake pressurizing device of the wind-air engine. Then the high-load air compressor connected with the deceleration and brake pressurizing device of the wind-air engine starts to generate the regeneration HPCA, which is supplemented to and stored in the air tank of the HPCA regeneration, storage and supply system of the wind-air engine, so as to supplement the rated quantity of the HPCA required to frequently restart the motor vehicle equipped with the wind-air engine. Thus, the quantity of the excessive HPCA required when the motor vehicle equipped with the wind-air engine is frequently decelerated, braked, stopped and restarted balances with the quantity of the regeneration HPCA generated by the deceleration and brake pressurizing device of the motor vehicle equipped with the wind-air engine. This ensures the rated quantity of the HPCA required to restart the motor vehicle equipped with the wind-air engine according to technical requirements, and ensures the wind-air engine to be started and accelerated normally to generate the power output.

The wind-air engine is installed in the front of the motor vehicle equipped with the wind-air engine at a position where the wind resistance is the greatest. The air tank of the HPCA regeneration, storage and supply system of the wind-air engine is connected with the central controller for HPCA start and acceleration of the wind-air engine. The controller for HPCA start and acceleration and the distributor of the wind-air engine are connected. The controller for HPCA start and acceleration, the distributor and the plurality of sets of air-jet pipes of the wind-air engine are connected. Then the controller for HPCA start and acceleration, the distributor and the plurality of sets of directional air-jet nozzles of the wind-air engine are connected. The central controller for HPCA start and acceleration of the wind-air engine is turned on, such that the HPCA stored in the air tank of the HPCA regeneration, storage and supply system of the wind-air engine is jetted from the plurality of sets of directional air-jet nozzles connected with the controller for HPCA start and acceleration and the distributor of the wind-air engine. This starts the operation of the impellers of the wind-air engine, such that the wind-air engine is started and operates to generate power. The power is output from the left impeller main shaft auxiliary power conical gear. The left impeller main shaft auxiliary power conical gear is connected with the conical gear for transmitting the distribution controller connected with the controller for HPCA automatic intermittent burst jet acceleration of the wind-air engine. This starts the cam shafts and the cam valve set connected with the distribution controller and the controller for HPCA automatic intermittent burst jet acceleration of the wind-air engine to operate. Meanwhile, the central controller for HPCA automatic intermittent burst jet acceleration of the wind-air engine is turned on, such that the HPCA stored in the air tank of the HPCA regeneration, storage and supply system of the wind-air engine is jetted. It passes through the distribution controller connected with the controller for HPCA automatic intermittent burst jet acceleration of the wind-air engine, passes through the plurality of sets of air-jet pipes connected with the distribution controller and the controller for HPCA automatic intermittent burst jet acceleration of the wind-air engine, and then passes through the plurality of sets of directional air jet nozzles connected with the distribution controller and the controller for HPCA automatic intermittent burst jet acceleration of the wind-air engine. Then, the cam shafts and the cam valve set connected with the distribution controller and the controller for HPCA automatic intermittent burst jet acceleration of the wind-air engine operate to control the automatic intermittent burst and jet airflow generated when the valves are opened or closed. The airflow is jetted from the plurality of sets of directional air-jet nozzles connected with the distribution controller and the controller for HPCA automatic intermittent burst jet acceleration of the wind-air engine, so as to drive the impellers of the wind-air engine to be accelerated to operate to generate power. The power is output from the right impeller main shaft auxiliary power conical gear of the wind-air engine, the right impeller main shaft auxiliary power conical gear is connected with and starts the conical gear for transmitting the HPCA compressor of the HPCA regeneration, storage and supply system of the wind-air engine. This starts the HPCA compressor of the started HPCA regeneration, storage and supply system of the wind-air engine to operate to generate the regeneration HPCA. The regeneration HPCA is supplied to the wind-air engine for recycling, such that the wind-air engine runs continuously to generate power output, and drives the motor vehicle equipped with the wind-air engine to move. The wind force and wind resistance generated, when the motor vehicle equipped with the wind-air engine is moving at a speed, enter from the outer edge of the directional trunk inlet of the wind-air engine which is installed in the front of the motor vehicle equipped with the wind-air engine at a position where the wind resistance is the greatest, and pass through the inner edge of the directional trunk inlet which is 1-30 times smaller than the outer edge of the directional trunk inlet, such that the wind resistance airflow drives the impellers of the wind-air engine to operate to generate power. The power is output from the central main power gear box of the wind-air engine, the central main power gear box is connected with a drive bridge of the motor vehicle equipped with the wind-air engine. The drive bridge is then connected with a half-axle of the drive bridge of the motor vehicle equipped with the wind-air engine, so as to transmit the power to tires of the motor vehicle equipped with the wind-air engine. Then, the motor vehicle equipped with the wind-air engine moves. When the motor vehicle equipped with the wind-air engine needs to be decelerated, the tires of the motor vehicle equipped with the wind-air engine are used to transmit the inertia power of the motor vehicle equipped with the wind-air engine before it is decelerated through the brake disk internal gear transmission mechanism of the brake of the deceleration and brake pressurizing device of the wind-air engine, and the inertia power of the motor vehicle equipped with the wind-air engine prior to its deceleration is output by the deceleration and brake pressurizing device of the wind-air engine. The deceleration and brake pressurizing device of the motor vehicle equipped with the wind-air engine is connected with the high-load air compressor, so as to start the high-load air compressor to operate to generate the regeneration HPCA. The regeneration HPCA is transmitted by the HPCA pipe connected with the high-load air compressor and the deceleration and brake pressurizing device of the motor vehicle equipped with the wind-air engine to be stored in the air tank of the HPCA regeneration, storage and supply system of the wind-air engine, such that the HPCA is recycled when the wind-air engine is started and accelerated.

The materials of the components of the wind-air engine of the present invention include conventional materials such as aluminum alloys, aluminum, copper, steel, iron, stainless steel and rigid plastics.

The present invention has the following advantages:

1. The wind-air engine is accelerated by the control system for HPCA automatic intermittent burst jet acceleration. When the wind-air engine is accelerated to generate power, because the engine is accelerated by the control system for HPCA automatic intermittent burst jet acceleration that effectively saves the HPCA and effectively generates the HPCA burst jet forces, the air-jet time is significantly shortened, and the quantity of the HPCA stored in the air tank of the HPCA regeneration, storage and supply system of the wind-air engine and the quantity of the HPCA generated by the continuously operating HPCA compressor of the HPCA regeneration, storage and supply system of the dual-impeller wind-air engine are significantly saved. Therefore, the air pressure of the HPCA storage remains high, which meets the requirements on the quantity of the HPCA for generating high air burst jet forces when the controller for HPCA automatic intermittent burst jet acceleration of the wind-air engine is started, for being converted to greater mechanical kinetic energy to ensure that the wind-air engine is normally started and accelerated to generate power. Meanwhile, the power generated when the wind-air engine is accelerated is output to start the continuous work of the HPCA compressor of the HPCA regeneration, storage and supply system of the wind-air engine, so as to recycle the regeneration HPCA. Thus, the HPCA compressor of the HPCA regeneration, storage and supply system of the wind-air engine works continuously, and the quantity of the recycled regeneration HPCA is greater than the quantity of the HPCA required when the controller for HPCA automatic intermittent burst jet acceleration of the wind-air engine operates. This ensures the quantity of the HPCA required when the control system for HPCA automatic intermittent burst jet acceleration of the wind-air engine is accelerated to enable the wind-air engine to be accelerated to generate power. Thereby, it is ensured that the motor vehicle equipped with the wind-air engine can move over a long distance for a long time at a low speed or be frequently decelerated, idled and re-accelerated, and the wind-air engine continuously operates normally to generate power output to drive the motor vehicle equipped with the wind-air engine to move continuously when the wind force and wind resistance encountered by the directional trunk inlets of the wind-air engine when the motor vehicle moves at a speed reduces, or when no wind force or wind resistance is converted to airflow driving force to impel the impellers of the wind-air engine to operate to generate power as the vehicle does not move.

In order to overcome the frictional resistance between the valve stem heads and the top dead centers of the cams when the cams of the cam shafts in the cam shafts and the cam valve set connected to the automatic interval burst and air-jet distribution controller open the valves during the operation of the controller for HPCA automatic intermittent burst jet acceleration of the wind-air engine, the present invention adds sliding balls and sliding ball lubrication oil passage on the valve stem heads. This greatly reduces the frictional resistance between the valve stem heads and the top dead centers of the cams when the cam shafts and the cams operate to open the valves, and increases the operating speed of the wind-air engine to generate the optimum power.

When the motor vehicle equipped with the wind-air engine is decelerated by the deceleration and brake pressurizing device of the motor vehicle equipped with the wind-air engine, the inertia power of the motor vehicle equipped with the wind-air engine before it is decelerated and braked is transformed to a pressurizing function through the deceleration and brake pressurizing device of the motor vehicle equipped with the wind-air engine. This generates the regeneration HPCA for storage and recycling, such that the wind-air engine is continuously accelerated to operate to achieve the optimum power performance.

The present invention is applicable to enable the wind-air engine to be normally started, accelerated, and continuously accelerated to generate power without being restricted by the wind conditions.

### Brief Description of the Drawings

FIG. 1 is a schematic view of the wind-air engine of the present invention;
FIG. 2 is a schematic view of the wind-air engine and a central main power output gear box;
FIG. 3 is a schematic view of the HPCA regeneration, storage and supply system of the wind-air engine and the controller for start and acceleration of the wind-air engine and the control system for HPCA automatic intermittent burst jet acceleration;
FIG 4 is a schematic view of the cam shafts and the cam valve set connected with the distribution controller and the controller for HPCA automatic intermittent burst jet acceleration of the wind-air engine;
FIG. 5 is a schematic view of the wind-air engine;
FIG. 6 is a schematic view of the sliding balls at the cam stem heads of the cam shafts and the cam valve set connected with the distribution controller and the controller for HPCA automatic intermittent burst jet acceleration of the wind-air engine;
FIG. 7 is a schematic view of the brake disk internal gear transmission mechanism of the brake of the deceleration and brake pressurizing device of the wind-air engine;
FIG. 8 is a schematic view of the deceleration and brake pressurizing device of the wind-air engine; and
FIG. 9 is a schematic view of the position of the wind-air engine installed in the front of a motor vehicle equipped with the wind-air engine and the connection relationship between the wind-air engine and various system structures of the motor vehicle equipped with the wind-air engine and the working principle thereof

### Description of Embodiments

The present invention is described in more derail with reference to the accompanying drawings and the embodiments.

In the drawings, the wind-air engine includes the following mechanisms and systems. The wind-air engine 20 includes outer edges 29 of directional trunk inlets, inner edges 30 of the directional trunk inlets, impeller chambers 28, impellers 6, impeller flywheels 14, a left impeller main shaft auxiliary power conical gear 7, a right impeller main shaft auxiliary power conical gear 15, a central main power output gear box 32, and air outlets 31; a HPCA regeneration, storage and supply system of the wind-air engine, including an air tank 1, a HPCA compressor 17, and a conical gear 16 for transmitting the HPCA compressor; an air-jet system for start and acceleration of the wind-air engine, including a central controller for HPCA start and acceleration 2, a distributor 3, a plurality of sets of air-jet pipes 4 connected with the distributor, a plurality of sets of directional air-jet nozzles 5 in communication with the distributor, a central controller for HPCA automatic intermittent burst jet acceleration 10, a distribution controller 11, a plurality of sets of air-jet pipes 12 connected with the distribution controller, a plurality of sets of directional air-jet nozzles 13 in communication with the distribution controller, a conical gear 8 for transmitting the distribution controller, cam shafts and cam valve set 9 connected with the distribution controller, a central HPCA jet pipe 26 connected with the controller for HPCA start and acceleration, and a central HPCA jet pipe 27 connected with the controller for HPCA automatic intermittent burst jet acceleration; a deceleration and brake pressurizing system of the wind-air engine, including a deceleration and brake pressurizing device 42, a brake disk internal gear transmission mechanism 40 of a brake of the deceleration and brake pressurizing device, and a high-load air compressor 41 transmitted by the deceleration and brake pressurizing device.

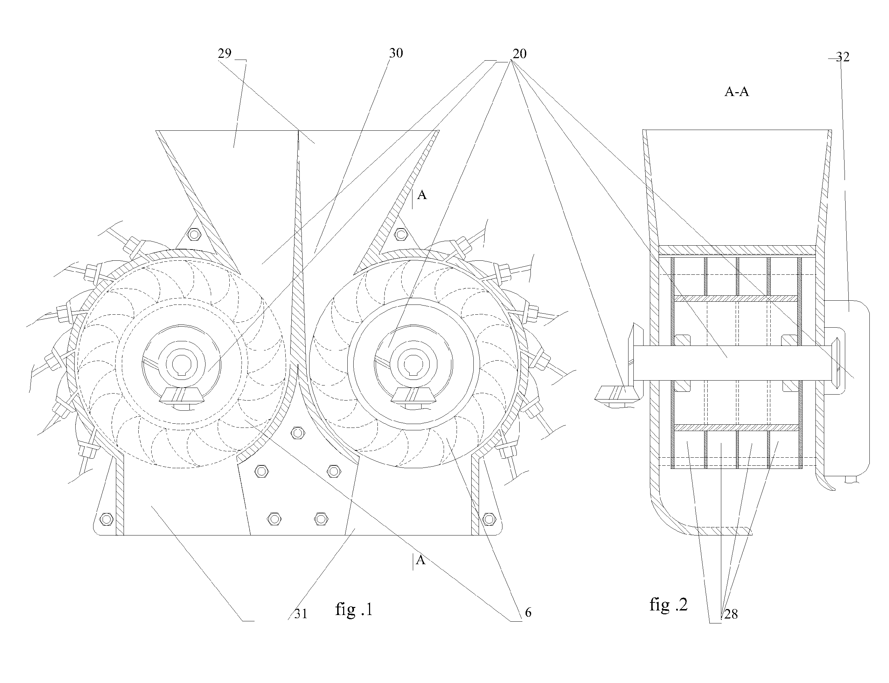

In FIGs. 1 and 2, the wind-air engine 20 of the present invention is an engine installed in large, medium or small size cargo or passenger vehicles having steering wheels, railway trains, subway trains moving on land, marine travel vehicle, aero space travel vehicle and all other motor vehicles that move at a speed. The wind-air engine is not restricted by natural weather, ambient and wind conditions, and it uses the HPCA stored in the HPCA regeneration, storage and supply system of the wind-air engine that can be controlled freely to achieve the self-start of the wind-air engine to output power which drives the motor vehicle equipped with the wind-air engine moves at a speed. The wind force and wind resistance airflow generated when the motor vehicle equipped with the wind-air engine moves at a speed enter from the directional trunk inlets of the wind-air engine, so as to drive the impellers 6 of the wind-air engine to rotate to obtain the mechanical kinetic energy. The mechanical kinetic energy and the inertia power encountered when the motor vehicle equipped with the wind-air engine is driven by the wind-air engine to move at a speed are output, in order to start the HPCA compressor 17 of the HPCA regeneration, storage and supply system of the wind-air engine to work continuously, so as to generate the regeneration HPCA, which is stored and converted into the mechanical kinetic energy. Therefore, in the case that the wind force and wind resistance encountered when the vehicle moving at a speed after being self-started and the regeneration HPCA are recycled and used as the power source, the stored HPCA is used to start the acceleration of the wind-air engine to output power. This drives the motor vehicle equipped with the wind-air engine, so that the wind force and wind resistance airflow encountered when the vehicle moving at a speed after being self-started enter from the outer edges 29 of the directional trunk inlets of the wind-air engine, and pass through the directional trunk inlets of the wind-air engine at a high speed. The outer edge 29 of the directional trunk inlet is preferably 3.6 times larger than the inner edge 30 of the directional trunk inlet. Thus, the wind force and wind resistance airflow generate HPCA airflow at the inner edges 30 of the directional trunk inlets of the wind-air engine and in the impeller chambers 28, and drive the impellers 6 of the wind-air engine to rotate at a high speed to generate and output power, so as to drive the motor vehicle equipped with the wind-air engine to move at a speed. Meanwhile, the inertia power generated when the motor vehicle equipped with the wind-air engine moves at a speed and the power generated when the wind-air engine 20 is accelerated by the controller for HPCA automatic intermittent burst jet acceleration are output at the same time. This starts the operation of the HPCA compressor of the HPCA regeneration, storage and supply system of the wind-air engine, and generates the regeneration HPCA continuously, which is stored in HPCA tank of the HPCA regeneration, storage and supply system of the wind-air engine, and is supplied to the central control system for HPCA automatic intermittent burst jet acceleration of the wind-air engine to be recycled for re-acceleration. Thus, the impellers of the wind-air engine can be accelerated to operate continuously to generate power, which drives the wind-air engine of the motor vehicle equipped with the wind-air engine having normal operating function. The engine is capable of being freely controlled. The engine recycles the wind force and wind resistance when the vehicle moving at a speed after being started, and recycles the regeneration HPCA as the power source.

In order to more rapidly and more powerfully start the dual impellers of the wind-air engine, a design of grid partition is adopted for blades of the impellers of the wind-air engine of the present invention, i.e., the blades of the impellers of the wind-air engine are partitioned into X minimum units of impeller chambers 28, such that the HPCA airflow jetted from the plurality of sets of directional air-jet nozzles of the HPCA jet system of the wind-air engine is more concentrated on the X minimum units of impeller chambers 28 partitioned from the blades. This generates the most powerful and most concentrated HPCA airflow, and impels the impellers of the wind-air engine to be accelerated to operate more rapidly and more powerfully to generate power.

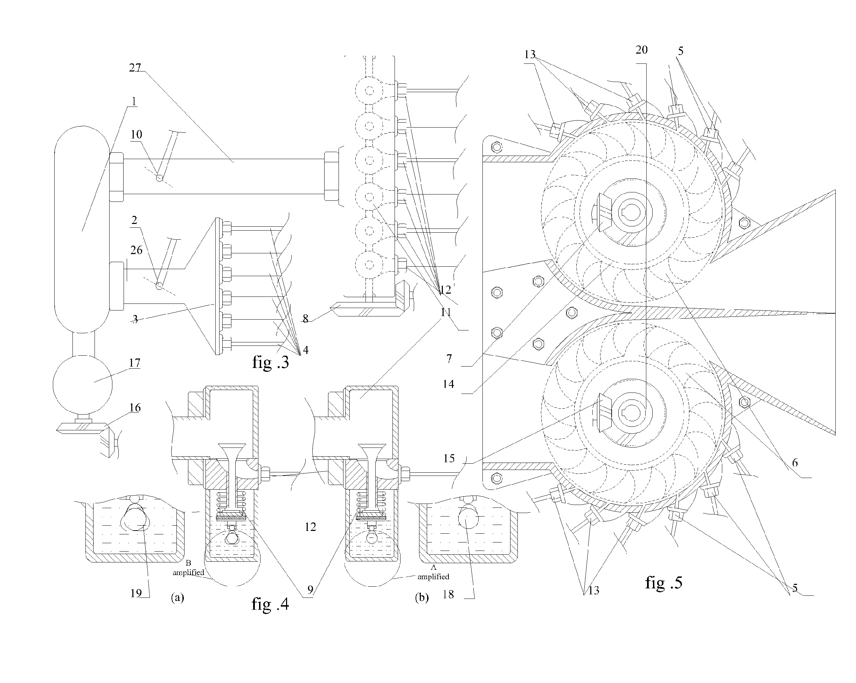

In FIGs. 3, 4, and 5, in the control system for HPCA automatic intermittent burst jet acceleration of the wind-air engine, namely the engine using the wind and air pressure as energy to replace fuel, of the present invention, the HPCA stored in the air tank 1 of the HPCA regeneration, storage and supply system of the wind-air engine is used. When the central controller for HPCA start and acceleration 2 disposed on the air tank 1 of the HPCA regeneration, storage and supply system of the wind-air engine is turned on, the HPCA stored in the air tank 1 of the HPCA regeneration, storage and supply system air tank of the wind-air engine is jetted and passes through the distributor 3 connected with the controller for HPCA start and acceleration of the wind-air engine, so as to distribute the HPCA to the plurality of sets of air-jet pipes 4 connected with the distributor and the controller for HPCA start and acceleration of the wind-air engine. Then HPCA airflow is jetted from the plurality of sets of directional air-jet nozzles 5 connected with the distributor and the controller for HPCA start and acceleration of the wind-air engine, and drives the impellers 6 of the wind-air engine, such that the impellers 6 of the wind-air engine are started and accelerated to generate power. The power is then output by the left impeller main shaft auxiliary power conical gear 7 of the wind-air engine to the conical gear 8 for transmitting the distribution controller connected with the controller for HPCA automatic intermittent burst jet acceleration of the wind-air engine. The conical gear 8 then drives the cam shafts and cam valve set 9 of the distribution controller connected with the controller for HPCA automatic intermittent burst jet acceleration of the wind-air engine to be started, and to turn on the controller for HPCA automatic intermittent burst jet acceleration 10 of the wind-air engine at the same time, such that the HPCA is jetted and supplied to the distribution controller 11 connected with the controller for HPCA automatic intermittent burst jet acceleration of the wind-air engine. The cam shafts and cam valve set 9 of the distribution controller connected with the controller for HPCA automatic intermittent burst jet acceleration of the wind-air engine continue to operate. The cams 18 of the cam shafts and cam valve set of the distribution controller connected with the controller for HPCA automatic intermittent burst jet acceleration of the wind-air engine synchronously open or close a plurality of sets of valves, such that the plurality of sets of valves are synchronously opened or closed to generate synchronous automatic intermittent burst HPCA airflow, or the cams 19 of the cam shafts and cam valve set of the distribution controller connected with the controller for HPCA automatic intermittent burst jet acceleration of the wind-air engine open or close a plurality of sets of valves in distribution, such that the plurality of sets of valves are opened or closed in distribution to generate distributional automatic intermittent burst HPCA airflow. The airflow is distributed to the plurality of sets of air-jet pipes 12 connected with the distribution controller and the controller for HPCA automatic intermittent burst jet acceleration of the wind-air engine, then the automatic intermittent burst HPCA airflow jetted from the plurality of sets of directional air-jet nozzles 13 connected with the distribution controller and the controller for HPCA automatic intermittent burst jet acceleration of the wind-air engine impels the plurality of sets of impellers 6 of the wind-air engine to be accelerated to run, such that the flywheels 14 of the plurality of sets of impellers of the wind-air engine are accelerated accordingly to generate inertia forces, making the wind-air engine 20 to output powerful torque. The right impeller main shaft auxiliary power conical gear 15 of the wind-air engine outputs the power to the conical gear 16 for transmitting the HPCA compressor of the HPCA regeneration, storage and supply system of the wind-air engine, and the conical gear 16 starts the HPCA compressor 17 of the HPCA regeneration, storage and supply system of the wind-air engine to work to generate the HPCA, which is supplemented to and stored in the air tank 1 of the HPCA regeneration, storage and supply system of the wind-air engine. Therefore, the rated quantity of the HPCA that the central control system for HPCA start and acceleration 2 of the wind-air engine required to start the acceleration and the rated quantity of the HPCA that the central control system for HPCA automatic intermittent burst jet acceleration of the wind-air engine requires to perform acceleration are obtained, so as to ensure that the wind-air engine is continuously accelerated to generate power.

In order to obtain the rated quantity of the HPCA meeting the technical requirements of HPCA automatic intermittent burst jet by the plurality of sets of directional air-jet nozzles 5 connected with the distribution controller and the controller for HPCA start and acceleration of the wind-air engine, and to obtain the rated quantity of the HPCA meeting the technical requirements of HPCA automatic intermittent burst jet by the plurality of sets of directional air-jet nozzles 13 connected with the distribution controller and the controller for HPCA automatic intermittent burst jet acceleration of the wind-air engine, the present invention adopts the design that the diameter of the central HPCA j et pipe 26 connected with the central controller for HPCA start and acceleration of the wind-air engine is several times greater than the total diameter of the plurality of sets of directional air-jet nozzles 5 connected with the distributor and the central controller for HPCA start and acceleration of the wind-air engine. In addition, a diameter of the central HPCA jet pipe 27 connected with the central controller for HPCA automatic intermittent burst jet acceleration of the wind-air engine is several times greater than the total diameter of the plurality of sets of directional air-jet nozzles 13 connected with the distribution controller and the central controller for HPCA automatic intermittent burst jet acceleration of the wind-air engine.

In order to directionally start and accelerate the dual-impeller 6 of the wind-air engine to generate power, the present invention adopts a design of the plurality of sets of directional air-jet nozzles 5connected with the distributor and the controller for HPCA start and acceleration of the wind-air engine and the plurality of sets of directional air-jet nozzles 13 connected with the distribution controller and the controller for HPCA automatic intermittent burst jet acceleration of the wind-air engine, such that directional air-jet function is achieved.

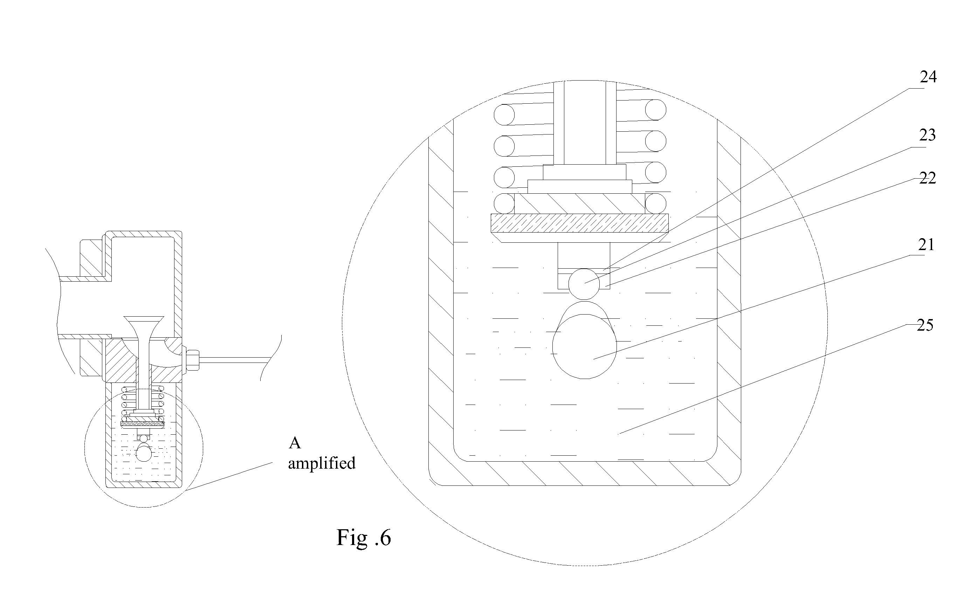

In FIG. 6, in order to overcome or reduce the frictional resistance between the valve stem heads 22 of the cam shafts and the cam valve set connected with the distribution controller and the controller for HPCA automatic intermittent burst jet acceleration of the wind-air engine and the cams 21 of the cam shafts and the cam valve set connected with the distribution controller and the controller for HPCA automatic intermittent burst jet acceleration of the wind-air engine when the cams 21 of the cam shafts and the cam valve set connected with the distribution controller and the controller for HPCA automatic intermittent burst jet acceleration of the wind-air engine operate to open or close the valves of the cam shafts and the cam valve set, the present invention adds sliding balls to the valve stem heads 22 of the cam shafts and the cam valve set connected with the distribution controller and the controller for HPCA automatic intermittent burst jet acceleration of the wind-air engine. In order to make the sliding balls 23 at the valve stem heads of the cam shafts and the cam valve set connected with the distribution controller and the controller for HPCA automatic intermittent burst jet acceleration of the wind-air engine slide freely, the present invention adds a lubrication oil passage on the valve stem heads 22 of the cam shafts and the cam valve set connected with the distribution controller and the controller for HPCA automatic intermittent burst jet acceleration of the wind-air engine, such that lubrication oil in a lubrication oil chamber 25 of the cam shafts and the cam valve set connected with the distribution controller and the controller for HPCA automatic intermittent burst jet acceleration of the wind-air engine flows onto surfaces of the sliding balls at the valve stem heads of the cam shafts and the cam valve set connected with the distribution controller and the controller for HPCA automatic intermittent burst jet acceleration of the wind-air engine through the lubrication oil passage 24, so as to achieve the lubrication, reduce the frictional resistance, improve the operating speed of the wind-air engine, and generate greater output torque.

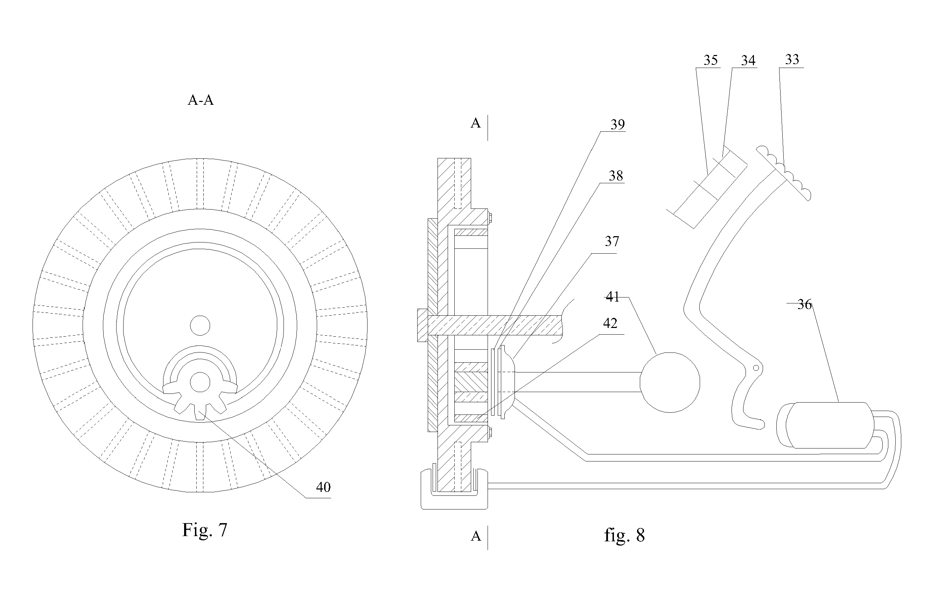

In FIGs. 7 and 8, when the motor vehicle equipped with the wind-air engine needs to be frequently decelerated, braked, stopped or restarted, the HPCA regenerated by the HPCA compressor in the HPCA regeneration, storage and supply system of the wind-air engine when the motor vehicle equipped with the wind-air engine moves normally will be consumed excessively, which affects the rated quantity of the HPCA required to restart the motor vehicle equipped with the wind-air engine. In order to supplement the quantity of the excessively consumed HPCA when the vehicle equipped with the wind-air engine is frequently decelerated, braked, stopped or restarted, and to ensure the rated quantity of the HPCA required to restart the wind-air engine, the present invention provides a wind-air engine deceleration and brake pressurizing device 42 that recycles the inertia power of the motor vehicle equipped with the wind-air engine moving at a speed when it is frequently decelerated and braked, and transforms the inertia power into the HPCA kinetic power to be reused.

The technical scheme is achieved as follows. A pedal 33 of the deceleration and brake pressurizing device of the motor vehicle equipped with the wind-air engine is stepped down to change from a position of free travel 34 of the deceleration and brake pressurizing device of the wind-air engine to a position of deceleration and pressurization travel 35 of the deceleration and brake pressurizing device of the wind-air engine, a hydraulic master pump 36 of the deceleration and brake pressurizing device of the wind-air engine starts to work, and functions on a clutch driven disk hydraulic working pump 37 of the deceleration and brake pressurizing device of the wind-air engine. The clutch driven disk hydraulic working pump 37 starts to push a clutch driven disk 38 of the deceleration and brake pressurizing device of the wind-air engine to combine with a clutch driving disk 39 of the deceleration and brake pressurizing device of the wind-air engine, so that the inertia power of the motor vehicle equipped with the wind-air engine when being decelerated is output by a brake disk internal gear transmission mechanism 40 of a brake of the deceleration and brake pressurizing device of the wind-air engine. This starts the high-load air compressor 41 connected with the deceleration and brake pressurizing device of the wind-air engine to work to generate the regeneration HPCA, which is supplemented to and stored in the air tank of the HPCA regeneration, storage and supply system of the wind-air engine, so as to supplement the rated quantity of the HPCA required to frequently restart the motor vehicle equipped with the wind-air engine frequently. Thus, the quantity of the excessive HPCA required when the motor vehicle equipped with the wind-air engine is frequently decelerated, braked, stopped and restarted balances with the quantity of the regeneration HPCA generated by the deceleration and brake pressurizing device 42 of the motor vehicle equipped with the wind-air engine, so as to ensure the rated quantity of the HPCA required to restart the motor vehicle equipped with the wind-air engine according to technical requirements, and ensure the wind-air engine to be started and accelerated to operate normally to generate the power output.

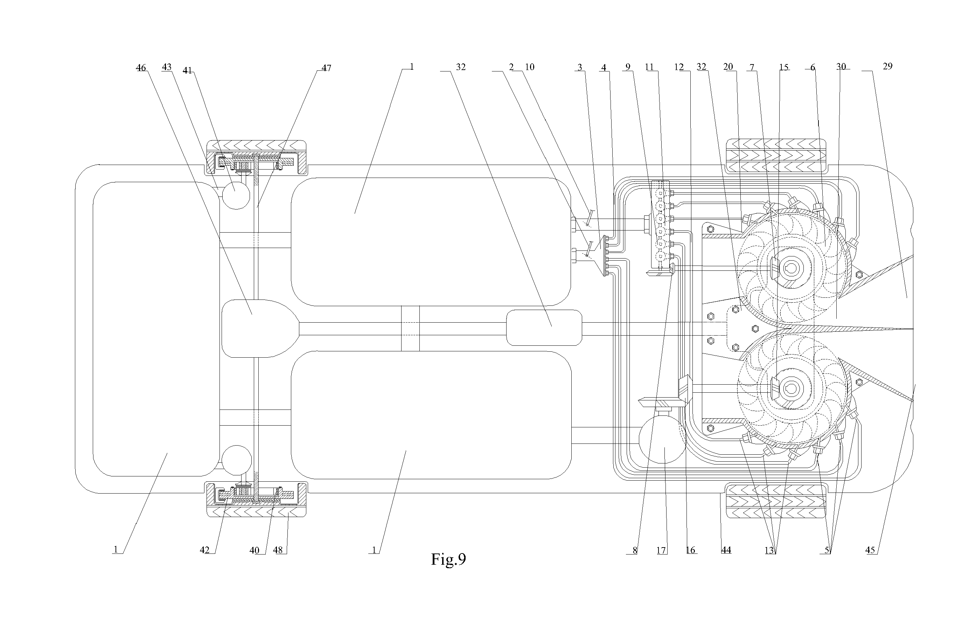

In FIG. 9, the wind-air engine is installed in the front of the motor vehicle 44 equipped with the wind-air engine at a position 45 where the wind resistance is the greatest, and the air tank 1 of the HPCA regeneration, storage and supply system of the wind-air engine is connected with the central controller for HPCA start and acceleration 2 of the wind-air engine. The controller for HPCA start and acceleration and the distributor 3 of the wind-air engine are connected. The controller for HPCA start and acceleration, the distributor and the plurality of sets of air-jet pipes 4 of the wind-air engine are connected. Then the controller for HPCA start and acceleration, the distributor and the plurality of sets of directional air-jet nozzles 5 of the wind-air engine are connected. The central controller for HPCA start and acceleration 2 of the wind-air engine is turned on, such that the HPCA stored in the air tank 1 of the HPCA regeneration, storage and supply system of the wind-air engine is jetted from the plurality of sets of directional air-jet nozzles 5 connected with the distributor and the controller for HPCA start and acceleration of the wind-air engine, so as to start the operation of the impellers 6 of the wind-air engine. Then the wind-air engine 20 is started to generate power. The power is output from the left impeller main shaft auxiliary power conical gear 7 to the conical gear 8 for transmitting the distribution controller connected with the controller for HPCA automatic intermittent burst jet acceleration of the wind-air engine, so as to start the cam shafts and the cam valve set 9 connected with the distribution controller and the controller for HPCA automatic intermittent burst jet acceleration of the wind-air engine , and meanwhile, the central controller for HPCA automatic intermittent burst jet acceleration 10 of the wind-air engine is turned on, such that the HPCA stored in the air tank 1 of the HPCA regeneration, storage and supply system of the wind-air engine is jetted, which passes through the distribution controller 11 connected with the controller for HPCA automatic intermittent burst jet acceleration of the wind-air engine, passes through the plurality of sets of air-jet pipes 12 connected with the distribution controller and the controller for HPCA automatic intermittent burst jet acceleration of the wind-air engine, and then passes through the plurality of sets of directional air-jet nozzles 13 connected with the distribution controller and the controller for HPCA automatic intermittent burst jet acceleration of the wind-air engine, so as to make the cam shafts and the cam valve set 9 connected with the distribution controller and the controller for HPCA automatic intermittent burst jet acceleration of the wind-air engine operate to control the automatic intermittent burst and jet airflow generated when the valves of the cam shafts and the cam valve set 9 are opened or closed. The airflow is jetted from the plurality of sets of directional air-jet nozzles 13 connected with the distribution controller and the controller for HPCA automatic intermittent burst jet acceleration of the wind-air engine, so as to impel the impellers 6 of the wind-air engine to be accelerated to generate power. The power is output from the right impeller main shaft auxiliary power conical gear 15 of the wind-air engine to start the conical gear 16 for transmitting the HPCA compressor connected with the HPCA regeneration, storage and supply system of the wind-air engine. The conical gear 16 starts the work of the HPCA compressor 17 of the HPCA regeneration, storage and supply system of the wind-air engine, so as to generate the regeneration HPCA, and supplies it to the wind-air engine for recycling, such that the wind-air engine operates continuously to generate power output, and drives the motor vehicle 44 equipped with the wind-air engine to move. The wind force and wind resistance generated when the motor vehicle 44 equipped with the wind-air engine is moving at a speed enter from the outer edge 29 of the directional trunk inlets of the wind-air engine which are installed in the front of the motor vehicle 44 equipped with the wind-air engine at a position 45 where the wind resistance is the greatest. The outer edge 29 of the directional trunk inlet is 3.6 times greater than the inner edge 30 of the directional trunk inlet, such that the wind resistance airflow drives the impellers 6 of the wind-air engine to generate power. The power is output from the central main power gear box 32 of the wind-air engine, which is connected with a drive bridge 46 of the motor vehicle equipped with the wind-air engine. The drive bridge is then connected with a half-axle 47 of the drive bridge of the motor vehicle 44 equipped with the wind-air engine, so as to transmit the power to tires 48 of the motor vehicle equipped with the wind-air engine, such that the motor vehicle 44 equipped with the wind-air engine moves. When the motor vehicle 44 equipped with the wind-air engine needs to be decelerated, the tires 48 of the motor vehicle equipped with the wind-air engine are used to transmit the inertia power of the motor vehicle equipped with the wind-air engine before it is decelerated through the brake disk internal gear transmission mechanism 40 of the brake of the deceleration and brake pressurizing device of the wind-air engine. The inertia power of the motor vehicle 44 equipped with the wind-air engine before it is decelerated is output by the deceleration and brake pressurizing device 42 of the wind-air engine to start the high-load air compressor 41 connected with the deceleration and brake pressurizing device of the motor vehicle equipped with the wind-air engine, so as to generate the regeneration HPCA, which passes through the HPCA pipe 43 of the high-load air compressor 41 connected with the deceleration and brake pressurizing device of the motor vehicle equipped with the wind-air engine, and is transmitted to and stored in the air tank 1 of the HPCA regeneration, storage and supply system of the wind-air engine, such that the HPCA is recycled when the wind-air engine 20 is started and accelerated.

## Claims

1. A wind-air engine includes the following mechanisms and systems; the wind-air engine includes outer edges of directional trunk inlets, inner edges of the directional trunk inlets, impeller chambers, impellers, impeller flywheels, a left impeller main shaft auxiliary power conical gear, a right impeller main shaft auxiliary power conical gear, a central main power output gear box, and air outlets; a HPCA regeneration, storage and supply system of the wind-air engine, including an air tank, a HPCA compressor, and a conical gear for transmitting the HPCA compressor; an air-jet system for start and acceleration of the wind-air engine, including a central controller for HPCA start and acceleration, a distributor, a plurality of sets of air-jet pipes connected with the distributor, a plurality of sets of directional air-jet nozzles connected with the distributor, a central controller for HPCA automatic intermittent burst jet acceleration, a distribution controller, a plurality of sets of air-jet pipes connected with the distribution controller, a plurality of sets of directional air-jet nozzles connected with the distribution controller, a conical gear for transmitting the distribution controller, cam shafts and a cam valve set connected with the distribution controller, a central HPCAjet pipe connected with the controller for HPCA start and acceleration, and a central HPCA jet pipe connected with the controller for HPCA automatic intermittent burst jet acceleration; a deceleration and brake pressurizing system of the wind-air engine, including a deceleration and brake pressurizing device, a brake disk internal gear transmission mechanism of the deceleration and brake pressurizing device, and a high-load air compressor connected with the deceleration and brake pressurizing device; wherein the wind-air engine of the present invention is an engine installed in large, medium or small size cargo or passenger vehicles having steering wheels, railway trains, subway trains moving on land, marine travel vehicle, aero space travel vehicle and all other motor vehicles that move at a speed; the wind-air engine is not restricted by natural weather, ambient and wind conditions; it uses the HPCA that can be controlled freely and stored in the HPCA regeneration, storage and supply system of the wind-air engine to achieve the self-start of the wind-air engine to output power; the wind force and wind resistance airflow generated, when the motor vehicle equipped with the wind-air engine moves at a speed, enter from directional trunk inlets of the wind-air engine, which impel the impellers of the wind-air engine to operate and obtain the mechanical kinetic energy, and output the mechanical kinetic energy; the inertia power encountered when the motor vehicle equipped with the wind-air engine is driven by the wind-air engine to move at a speed starts the HPCA compressor of the HPCA regeneration, storage and supply system of the wind-air engine to work continuously, thereby generating the regeneration HPCA to be stored, and converting the HPCA into the mechanical kinetic energy; when the wind force and wind resistance encountered by the moving vehicle after being self-started and the regeneration HPCA is recycled and used as the power source, the stored HPCA is used to start the wind-air engine to be accelerated to output power, so as to drive the motor vehicle equipped with the wind-air engine; the wind force and wind resistance airflow encountered by the moving vehicle after being self-started enter from the outer edge of the directional trunk inlet of the wind-air engine, and pass through the inner edge of the directional trunk inlet of the wind-air engine, which is 1-30 times smaller than the outer edge of the directional trunk inlet, at a high speed; thus, the wind force and wind resistance airflow generate HPCA airflow at the inner edge of the directional trunk inlet of the wind-air engine and in the impeller chambers; the HPCA airflow impels the impellers of the wind-air engine to rotate at a high speed to generate and output power, so as to drive the motor vehicle equipped with the wind-air engine to move at a speed; meanwhile, the inertia power encountered when the motor vehicle equipped with the wind-air engine moves at a speed and the power generated when the wind-air engine is accelerated to operate by the controller for HPCA automatic intermittent burst jet acceleration are output at the same time, so as to start the HPCA compressor of the HPCA regeneration, storage and supply system of the wind-air engine to work, and generate the regeneration HPCA continuously, which is stored in HPCA tank of the HPCA regeneration, storage and supply system of the wind-air engine, for being supplied to the central control system for HPCA automatic intermittent burst jet acceleration of the wind-air engine to be recycled for re-acceleration; thus, the impellers of the wind-air engine can be accelerated to operate continuously to generate power, which drives the wind-air engine of the motor vehicle equipped with the wind-air engine having normal operation function and capable of freely controlling and recycling the wind force and wind resistance when the vehicle moves at a speed after being self-started, and recycling the regeneration HPCA as the power source;
In order to more rapidly and more powerfully start and operate the impellers of the wind-air engine, a design of grid partition is adopted with regard to the blades of the impellers of the wind-air engine of the present invention, i;e;, the blades of the impellers of the wind-air engine are partitioned into x minimum units of impeller chambers, such that the HPCA airflow jetted from the plurality of sets of directional air-jet nozzles of the HPCA jet system of the wind-air engine is more concentrated on the x minimum units of impeller chambers partitioned from the blades, so as to generate the most powerful and most concentrated HPCA airflow, and impel the impellers of the wind-air engine to be accelerated and operaets more rapidly and more powerfully to generate power;
A controller for HPCA automatic intermittent burst jet acceleration of the wind-air engine, wherein in the present invention, the wind-air engine, namely the engine using the wind and air pressure as energy to replace fuel, is accelerated by the control system for HPCA automatic intermittent burst jet acceleration; when the wind-air engine is accelerated to generate power, as it is accelerated by the control system for HPCA automatic intermittent burst jet acceleration that effectively saves the HPCA and effectively generates the HPCA burst jet forces, the air-jet time is shortened significantly, which greatly saves the quantity of the HPCA stored in the air tank of the HPCA regeneration, storage and supply system of the wind-air engine and the quantity of the HPCA generated by the continuously operating HPCA compressor of the HPCA regeneration, storage and supply system of the wind-air engine; thus, the quantity of the stored HPCA remains at a high pressure, so as to meet the requirement on the quantity of the HPCA that is required when the control system for HPCA automatic intermittent burst jet acceleration of the wind-air engine is started and accelerated to operate and is capable of generating high burst jet forces, so as to convert into greater mechanical kinetic energy; thereby, it is ensured that the wind-air engine is started and accelerated to generate power normally; meanwhile, the power generated when the wind-air engine is accelerated is output to start the HPCA compressor of the HPCA regeneration, storage and supply system of the wind-air engine to work continuously, so as to recycle the regeneration HPCA, such that the HPCA compressor of the HPCA regeneration, storage and supply system of the wind-air engine works continuously; the quantity of the recycled regeneration HPCA is greater than the quantity of the consumed HPCA required by the acceleration work of the control system for HPCA automatic intermittent burst jet acceleration of the wind-air engine; thus, the quantity of the HPCA required when the wind-air engine is accelerated by the control system for HPCA automatic intermittent burst jet acceleration is guaranteed, and the wind-air engine is accelerated to generate power; the present invention ensures that the wind-air engine continuously runs normally to generate power output to drive the motor vehicle equipped with the wind-air engine to move continuously when the motor vehicle equipped with the wind-air engine moves over a long distance for a long time at a low speed or needs to be frequently decelerated, idled and re-accelerated, such that the wind force and wind resistance encountered by the directional trunk inlet of the wind-air engine when the motor vehicle runs at a speed reduces, or when the impellers are not impelled to operate to generate power due to the vehicle does not move to generate the wind force or wind resistance and convert it into airflow driving forces;
The technical schemes are realized as follows; the HPCA stored in the air tank of the HPCA regeneration, storage and supply system of the wind-air engine is used to turn on the central controller for HPCA start and acceleration disposed in the air tank of the HPCA regeneration, storage and supply system of the wind-air engine, such that the HPCA stored in the air tank of the HPCA regeneration, storage and supply system air tank of the wind-air engine is jetted and passes through the distributor connected with the controller for HPCA start and acceleration of the wind-air engine, so as to distribute the HPCA to the plurality of sets of air-jet pipes connected with the distributor and the controller for HPCA start and acceleration; then, HPCA airflow is jetted from the plurality of sets of directional air-jet nozzles in communication with the distributor and the controller for HPCA start and acceleration of the wind-air engine, so as to impel the impellers of the wind-air engine, such that the impellers of the wind-air engine are started and accelerated to operate to generate power; the power is then output by the left impeller main shaft auxiliary power conical gear of the wind-air engine; the left impeller main shaft auxiliary power conical gear is connected with and starts the conical gear for transmitting the distribution controller connected with the controller for HPCA automatic intermittent burst jet acceleration of the wind-air engine, so as to drive the cam shafts and cam valve set connected with the distribution controller and the controller for HPCA automatic intermittent burst jet acceleration of the wind-air engine to be started, and to turn on the central controller for HPCA automatic intermittent burst jet acceleration of the wind-air engine at the same time; then the HPCA is jetted and supplied to the distribution controller connected with the controller for HPCA automatic intermittent burst jet acceleration of the wind-air engine, and the cam shafts and cam valve set connected with the distribution controller and the controller for HPCA automatic intermittent burst jet acceleration of the wind-air engine continue to work; the cams of the cam shafts and cam valve set connected with the distribution controller and the controller for HPCA automatic intermittent burst jet acceleration of the wind-air engine synchronously open or close a plurality of sets of valves, such that the plurality of sets of valves are synchronously opened or closed to generate synchronous automatic intermittent burst HPCA airflow; alternatively, the cams of the cam shafts and cam valve set connected with the distribution controller and the controller for HPCA automatic intermittent burst jet acceleration of the wind-air engine open or close a plurality of sets of valves in distribution, such that the plurality of sets of valves are opened or closed in distribution to generate distributional automatic intermittent burst HPCA airflow; the HPCA airflow is distributed to the plurality of sets of air-jet pipes connected with the distribution controller and the controller for HPCA automatic intermittent burst jet acceleration of the wind-air engine, then the automatic intermittent burst HPCA airflow jetted from the plurality of directional air-jet nozzles connected with the distribution controller and the controller for HPCA automatic intermittent burst jet acceleration of the wind-air engine impels the plurality of sets of impellers of the wind-air engine to be accelerated to operate, such that the flywheels of the plurality of sets of impellers of the wind-air engine impeller are accelerated to operate accordingly to generate inertia forces, making the wind-air engine output powerful torque; the right impeller main shaft auxiliary power conical gear of the wind-air engine outputs the power, and the right impeller main shaft auxiliary power conical gear is connected with and starts the conical gear for transmitting the HPCA compressor of the HPCA regeneration, storage and supply system of the wind-air engine, so as to start the HPCA compressor of the HPCA regeneration, storage and supply system of the wind-air engine to work continuously, thereby generating the HPCA, which is supplemented to and stored in the air tank of the HPCA regeneration, storage and supply system of the wind-air engine, obtaining the rated quantity of the HPCA that the central control system for HPCA start and acceleration of the wind-air engine required to start the acceleration and the rated quantity of the HPCA that the central control system for HPCA automatic intermittent burst jet acceleration of the wind-air engine requires to start the acceleration, and ensuring that the wind-air engine is continuously accelerated to generate power;
It is important to obtain the rated quantity of the HPCA meeting the technical requirements of air-jet of the plurality of sets of directional air-jet nozzles connected with the distributor and the controller for HPCA start and acceleration of the wind-air engine; it is also important to obtain the rated quantity of the HPCA meeting the technical requirements of HPCA automatic intermittent burst jet by the plurality of sets of directional air-jet nozzles connected with the distribution controller and the controller for HPCA automatic intermittent burst jet acceleration of the wind-air engine; to achieve these purpose, the present invention adopts the design that the diameter of a central HPCA jet pipe connected with the central controller for HPCA start and acceleration of the wind-air engine is several times greater than the total diameter of the plurality of sets of directional air-jet nozzles connected with the distributor and the central controller for HPCA start and acceleration of the wind-air engine; in addition, a diameter of a central HPCAjet pipe connected with the central controller for HPCA automatic intermittent burst jet acceleration of the wind-air engine is several times greater than the total diameter of the plurality of sets of directional air-jet nozzles connected with the distribution controller and the controller for HPCA automatic intermittent burst jet acceleration of the wind-air engine respectively;
In order to make the impellers of the wind-air engine be directionally started and accelerated to operate to generate power, the present invention adopts a design that the plurality of sets of directional air-jet nozzles is connected with the distributor and the controller for HPCA start and acceleration of the wind-air engine; in addition, the plurality of sets of directional air-jet nozzles is connected with the distribution controller and the controller for HPCA automatic intermittent burst jet acceleration of the wind-air engine, such that directional air-jet function is achieved;
In order to overcome or reduce the frictional resistance between the valve stem heads of the cam shafts and the cam valve set connected with the distribution controller and the controller for HPCA automatic intermittent burst jet acceleration of the wind-air engine , and the cams of the cam shafts and the cam valve set connected with the distribution controller and the controller for HPCA automatic intermittent burst jet acceleration of the wind-air engine when the cams of the cam shafts and the cam valve set connected with the distribution controller and the controller for HPCA automatic intermittent burst jet acceleration of the wind-air engine operate to open or close the valves of the cam shafts and the cam valve set, the present invention adds sliding balls to the valve stem heads of the cam shafts and the cam valve set connected with the distribution controller and the controller for HPCA automatic intermittent burst jet acceleration of the wind-air engine; in order to make the sliding balls at the valve stem heads of the cam shafts and the cam valve set connected with the distribution controller and the controller for HPCA automatic intermittent burst jet acceleration of the wind-air engine slide freely, the present invention adds a lubrication oil passage on the valve stem heads of the cam shafts and the cam valve set connected with the distribution controller and the controller for HPCA automatic intermittent burst jet acceleration of the wind-air engine, such that lubrication oil in a lubrication oil chamber of the cam shafts and the cam valve set connected with the distribution controller and the controller for HPCA automatic intermittent burst jet acceleration of the wind-air engine flows onto surfaces of the sliding balls at the valve stem heads of the cam shafts and the cam valve set connected with the distribution controller and the controller for HPCA automatic intermittent burst jet acceleration of the wind-air engine through the lubrication passage, so as to realize the lubrication, reduce the frictional resistance, improve the operating speed of the wind-air engine, and generate greater output torque;
When the motor vehicle equipped with the wind-air engine needs to be frequently decelerated, braked, stopped or restarted, the HPCA regenerated by the HPCA compressor in the HPCA regeneration, storage and supply system of the wind-air engine when the motor vehicle equipped with the wind-air engine moves normally will be consumed excessively; this affects the rated quantity of the HPCA required to restart the motor vehicle equipped with the wind-air engine; in order to supplement the quantity of the excessively consumed HPCA when the vehicle equipped with the wind-air engine is frequently decelerated, braked, stopped or restarted, and to ensure the rated quantity of the HPCA required to restart the wind-air engine, the present invention provides a wind-air engine deceleration and brake pressurizing device that recycles the inertia power of the motor vehicle equipped with the wind-air engine moving at a speed when it is decelerated and braked frequently, and transforms the inertia power into the HPCA kinetic power to be reused;
The technical scheme is realized as follows: a pedal of the deceleration and brake pressurizing device of the motor vehicle equipped with the wind-air engine is stepped down to change from a position of free travel of the deceleration and brake pressurizing device of the wind-air engine to a position of deceleration and pressurization travel of the deceleration and brake pressurizing device of the wind-air engine; a hydraulic master pump of the deceleration and brake pressurizing device of the wind-air engine starts to work, and functions on a hydraulic working pump of a clutch driven disk of the deceleration and brake pressurizing device of the wind-air engine; this pushes the clutch driven disk of the deceleration and brake pressurizing device of the wind-air engine to combine with a clutch driving disk of the deceleration and brake pressurizing device of the wind-air engine, such that the inertia power of motor vehicle equipped with the wind-air engine when being decelerated is output by a brake disk internal gear transmission mechanism of the brake of the deceleration and brake pressurizing device of the wind-air engine; thenthe high-load air compressor connected with the deceleration and brake pressurizing device of the wind-air engine starts to generate the regeneration HPCA, which is supplemented to and stored in the air tank of the HPCA regeneration, storage and supply system of the wind-air engine, so as to supplement the rated quantity of the HPCA required to frequently restart the motor vehicle equipped with the wind-air engine; thus, the quantity of the excessive HPCA required when the motor vehicle equipped with the wind-air engine is frequently decelerated, braked, stopped and restarted balances with the quantity of the regeneration HPCA generated by the deceleration and brake pressurizing device of the motor vehicle equipped with the wind-air engine; this ensures the rated quantity of the HPCA required to restart the motor vehicle equipped with the wind-air engine according to technical requirements, and ensures the wind-air engine to be started and accelerated normally to generate the power output;
Technical features of the present invention comprise: the wind-air engine is installed in the front of the motor vehicle equipped with the wind-air engine at a position where the wind resistance is the greatest; the air tank of the HPCA regeneration, storage and supply system of the wind-air engine is connected with the central controller for HPCA start and acceleration of the wind-air engine; the controller for HPCA start and acceleration and the distributor of the wind-air engine are connected; the controller for HPCA start and acceleration, the distributor and the plurality of sets of air-jet pipes of the wind-air engine are connected; then the controller for HPCA start and acceleration, the distributor and the plurality of sets of directional air-jet nozzles of the wind-air engine are connected; the central controller for HPCA start and acceleration of the wind-air engine is turned on, such that the HPCA stored in the air tank of the HPCA regeneration, storage and supply system of the wind-air engine is jetted from the plurality of sets of directional air-jet nozzles connected with the controller for HPCA start and acceleration and the distributor of the wind-air engine; this starts the operation of the impellers of the wind-air engine, such that the wind-air engine is started and operates to generate power; the power is output from the left impeller main shaft auxiliary power conical gear; the left impeller main shaft auxiliary power conical gear is connected with the conical gear for transmitting the distribution controller connected with the controller for HPCA automatic intermittent burst jet acceleration of the wind-air engine; this starts the cam shafts and the cam valve set connected with the distribution controller and the controller for HPCA automatic intermittent burst jet acceleration of the wind-air engine to operate; meanwhile, the central controller for HPCA automatic intermittent burst jet acceleration of the wind-air engine is turned on, such that the HPCA stored in the air tank of the HPCA regeneration, storage and supply system of the wind-air engine is jetted; it passes through the distribution controller connected with the controller for HPCA automatic intermittent burst jet acceleration of the wind-air engine, passes through the plurality of sets of air-jet pipes connected with the distribution controller and the controller for HPCA automatic intermittent burst jet acceleration of the wind-air engine, and then passes through the plurality of sets of directional air-jet nozzles connected with the distribution controller and the controller for HPCA automatic intermittent burst jet acceleration of the wind-air engine; then, the cam shafts and the cam valve set connected with the distribution controller and the controller for HPCA automatic intermittent burst jet acceleration of the wind-air engine operate to control the automatic intermittent burst and jet airflow generated when the valves are opened or closed; the airflow is jetted from the plurality of sets of directional air-jet nozzles connected with the distribution controller and the controller for HPCA automatic intermittent burst jet acceleration of the wind-air engine, so as to drive the impellers of the wind-air engine to be accelerated to operate to generate power; the power is output from the right impeller main shaft auxiliary power conical gear of the wind-air engine, the right impeller main shaft auxiliary power conical gear is connected with and starts the conical gear for transmitting the HPCA compressor of the HPCA regeneration, storage and supply system of the wind-air engine; this starts the HPCA compressor of the started HPCA regeneration, storage and supply system of the wind-air engine to operate to generate the regeneration HPCA; the regeneration HPCA is supplied to the wind-air engine for recycling, such that the wind-air engine runs continuously to generate power output, and drives the motor vehicle equipped with the wind-air engine to move; the wind force and wind resistance generated, when the motor vehicle equipped with the wind-air engine is moving at a speed, enter from the outer edge of the directional trunk inlet of the wind-air engine which is installed in the front of the motor vehicle equipped with the wind-air engine at a position where the wind resistance is the greatest, and pass through the inner edge of the directional trunk inlet which is 1-30 times smaller than the outer edge of the directional trunk inlet, such that the wind resistance airflow drives the impellers of the wind-air engine to operate to generate power; the power is output from the central main power gear box of the wind-air engine, the central main power gear box is connected with a drive bridge of the motor vehicle equipped with the wind-air engine; the drive bridge is then connected with a half-axle of the drive bridge of the motor vehicle equipped with the wind-air engine, so as to transmit the power to tires of the motor vehicle equipped with the wind-air engine; then, the motor vehicle equipped with the wind-air engine moves; when the motor vehicle equipped with the wind-air engine needs to be decelerated, the tires of the motor vehicle equipped with the wind-air engine are used to transmit the inertia power of the motor vehicle equipped with the wind-air engine before it is decelerated through the brake disk internal gear transmission mechanism of the brake of the deceleration and brake pressurizing device of the wind-air engine, and the inertia power of the motor vehicle equipped with the wind-air engine prior to its deceleration is output by the deceleration and brake pressurizing device of the wind-air engine; the deceleration and brake pressurizing device of the motor vehicle equipped with the wind-air engine is connected with the high-load air compressor, so as to start the high-load air compressor to operate to generate the regeneration HPCA; the regeneration HPCA is transmitted by the HPCA pipe connected with the high-load air compressor and the deceleration and brake pressurizing device of the motor vehicle equipped with the wind-air engine to be stored in the air tank of the HPCA regeneration, storage and supply system of the wind-air engine, such that the HPCA is recycled when the wind-air engine is started and accelerated.

2. The wind-air engine as claimed in claim 1, wherein the wind-air engine is not restricted by natural weather, ambient and wind conditions; it uses the HPCA that can be controlled freely and stored in the HPCA regeneration, storage and supply system of the wind-air engine to achieve the self-start of the wind-air engine to output power; the wind force and wind resistance airflow generated, when the motor vehicle equipped with the wind-air engine moves at a speed, enter from directional trunk inlets of the wind-air engine, which impel the impellers of the wind-air engine to operate and obtain the mechanical kinetic energy, and output the mechanical kinetic energy; the inertia power encountered when the motor vehicle equipped with the wind-air engine is driven by the wind-air engine to move at a speed starts the HPCA compressor of the HPCA regeneration, storage and supply system of the wind-air engine to work continuously, thereby generating the regeneration HPCA to be stored, and converting the HPCA into the mechanical kinetic energy; and has the feature of recycling the wind force and wind resistance after being self-started and recycling the regeneration HPCA.

3. The wind-air engine as claimed in claim 1, wherein in order to ensure the wind force and wind resistance airflow encountered when the motor vehicle equipped with the wind-air engine is moving at a speed are amplified and converted into compressed wind force and wind resistance airflow, the present invention specially designs that the outer edge of the directional trunk inlet of the wind-air engine is 1-30 times greater than the inner edge of the directional trunk inlet, such that when the wind force and wind resistance airflow encountered when the motor vehicle equipped with the wind-air engine is moving at a speed enter from the outer edge of the directional trunk inlet of the wind-air engine, and pass through the inner edge of the directional trunk inlet which is 1-30 times smaller than the outer edge of the directional trunk inlet at a high speed, such that the wind force and wind resistance airflow are compressed and converted into HPCA airflow to generate the greatest airflow driving forces, which impels the impellers of the wind-air engine to run at a high speed to generate power, such that the stored HPCA is used to start the wind-air engine to be accelerated to run to generate power output, which drives the motor vehicle equipped with the wind-air engine; thus, the wind force and wind resistance airflow encountered after the vehicle is self-started and moves at a certain speed enter from the outer edge of the engine directional trunk inlet of the wind-air engine, and pass through the directional trunk inlet of the wind-air engine at a high speed; the outer edge 29 of the directional trunk inlet is 3;6 times of the inner edge 30 of the directional trunk inlet, such that the wind force and wind resistance airflow enter the impeller chambers from the inner edge of the directional trunk inlet of the wind-air engine, and generate HPCA airflow in the impeller chambers to impel the impellers of the wind-air engine to run at a high speed to generate power; the engine has the feature that the wind force and wind resistance airflow encountered after the vehicle is self-started and runs at a certain speed are amplified and converted into the compressed wind force and wind resistance airflow, which are then converted into the mechanical kinetic energy.

4. The wind-air engine as claimed in claim 1, wherein in order to more rapidly and more powerfully start and operate the impellers of the wind-air engine, a design of grid partition is adopted with regard to the blades of the impellers of the wind-air engine of the present invention, i;e;, the blades of the impellers of the wind-air engine are partitioned into x minimum units of impeller chambers, such that the HPCA airflow jetted from the plurality of sets of directional air-jet nozzles of the HPCAjet system of the wind-air engine is more concentrated on the x minimum units of impeller chambers partitioned from the blades, so as to generate the most powerful and most concentrated HPCA airflow, and impel the impellers of the wind-air engine to be accelerated and operaets more rapidly and more powerfully to generate power.

5. The wind-air engine as claimed in claim 1, wherein the wind-air engine is accelerated with the control system for HPCA automatic intermittent burst jet acceleration, as the time is saved due to the intermittent instant air-jet, the quantity of the HPCA is saved, so the quantity of the stored HPCA remains at the rated quantity of the HPCA meeting the technical requirements, and the rated intermittent burst and air-jet force meeting the technical requirements is obtained, so as to impel the plurality of sets of impellers of the wind-air engine to be accelerated to run to generate power output, and to start the HPCA compressor of the HPCA regeneration, storage and supply system to work continuously to recycle the regeneration HPCA, ensuring the continuous work of the HPCA compressor, the quantity of the recycled regeneration HPCA is greater than the quantity of the consumed HPCA during the intermittent burst jet acceleration of the control system for HPCA automatic intermittent burst jet acceleration, such that it is ensured that the motor vehicle equipped with the wind-air engine can move a long distance for a long term at a low speed or be decelerated, idled and re-accelerated frequently, and the wind-air engine can be started, idled, continuously accelerated and run to generate power output in case that the wind force and wind resistance encountered by the directional trunk inlets of the wind-air engine when the motor vehicle runs at a certain speed reduces, or in case that no wind force or wind resistance is converted to airflow driving force to impel the impellers of the wind-air engine to run to generate power as the vehicle does not move.

6. The wind-air engine as claimed in claim 1, wherein the controller for HPCA automatic intermittent burst jet acceleration of the wind-air engine, the HPCA stored in the air tank of the HPCA regeneration, storage and supply system of the wind-air engine is used to turn on the central controller for HPCA start and acceleration disposed in the air tank of the HPCA regeneration, storage and supply system of the wind-air engine, such that the HPCA stored in the air tank of the HPCA regeneration, storage and supply system air tank of the wind-air engine is jetted and passes through the distributor connected with the controller for HPCA start and acceleration of the wind-air engine, so as to distribute the HPCA to the plurality of sets of air-jet pipes connected with the distributor and the controller for HPCA start and acceleration; then, HPCA airflow is jetted from the plurality of sets of directional air-jet nozzles in communication with the distributor and the controller for HPCA start and acceleration of the wind-air engine, so as to impel the impellers of the wind-air engine, such that the impellers of the wind-air engine are started and accelerated to operate to generate power; the power is then output by the left impeller main shaft auxiliary power conical gear of the wind-air engine; the left impeller main shaft auxiliary power conical gear is connected with and starts the conical gear for transmitting the distribution controller connected with the controller for HPCA automatic intermittent burst jet acceleration of the wind-air engine, so as to drive the cam shafts and cam valve set connected with the distribution controller and the controller for HPCA automatic intermittent burst jet acceleration of the wind-air engine to be started, and to turn on the central controller for HPCA automatic intermittent burst jet acceleration of the wind-air engine at the same time; then the HPCA is jetted and supplied to the distribution controller connected with the controller for HPCA automatic intermittent burst jet acceleration of the wind-air engine, and the cam shafts and cam valve set connected with the distribution controller and the controller for HPCA automatic intermittent burst jet acceleration of the wind-air engine continue to work; the cams of the cam shafts and cam valve set connected with the distribution controller and the controller for HPCA automatic intermittent burst jet acceleration of the wind-air engine synchronously open or close a plurality of sets of valves, such that the plurality of sets of valves are synchronously opened or closed to generate synchronous automatic intermittent burst HPCA airflow; alternatively, the cams of the cam shafts and cam valve set connected with the distribution controller and the controller for HPCA automatic intermittent burst jet acceleration of the wind-air engine open or close a plurality of sets of valves in distribution, such that the plurality of sets of valves are opened or closed in distribution to generate distributional automatic intermittent burst HPCA airflow; the HPCA airflow is distributed to the plurality of sets of air-jet pipes connected with the distribution controller and the controller for HPCA automatic intermittent burst jet acceleration of the wind-air engine, then the automatic intermittent burst HPCA airflow jetted from the plurality of directional air-jet nozzles connected with the distribution controller and the controller for HPCA automatic intermittent burst jet acceleration of the wind-air engine impels the plurality of sets of impellers of the wind-air engine to be accelerated to operate, such that the flywheels of the plurality of sets of impellers of the wind-air engine impeller are accelerated to operate accordingly to generate inertia forces, making the wind-air engine output powerful torque; the right impeller main shaft auxiliary power conical gear of the wind-air engine outputs the power, and the right impeller main shaft auxiliary power conical gear is connected with and starts the conical gear for transmitting the HPCA compressor of the HPCA regeneration, storage and supply system of the wind-air engine, so as to start the HPCA compressor of the HPCA regeneration, storage and supply system of the wind-air engine to work continuously, thereby generating the HPCA, which is supplemented to and stored in the air tank of the HPCA regeneration, storage and supply system of the wind-air engine, obtaining the rated quantity of the HPCA that the central control system for HPCA start and acceleration of the wind-air engine required to start the acceleration and the rated quantity of the HPCA that the central control system for HPCA automatic intermittent burst jet acceleration of the wind-air engine requires to start the acceleration, and ensuring that the wind-air engine is continuously accelerated to generate power.

7. The wind-air engine as claimed in claim 1, wherein the controller for HPCA automatic intermittent burst jet acceleration of the wind-air engine, it is important to obtain the rated quantity of the HPCA meeting the technical requirements of air-jet of the plurality of sets of directional air-jet nozzles connected with the distributor and the controller for HPCA start and acceleration of the wind-air engine; it is also important to obtain the rated quantity of the HPCA meeting the technical requirements of HPCA automatic intermittent burst jet by the plurality of sets of directional air-jet nozzles connected with the distribution controller and the controller for HPCA automatic intermittent burst jet acceleration of the wind-air engine; to achieve these purpose, the present invention adopts the design that the diameter of a central HPCA jet pipe connected with the central controller for HPCA start and acceleration of the wind-air engine is several times greater than the total diameter of the plurality of sets of directional air-jet nozzles connected with the distributor and the central controller for HPCA start and acceleration of the wind-air engine; in addition, a diameter of a central HPCA jet pipe connected with the central controller for HPCA automatic intermittent burst jet acceleration of the wind-air engine is several times greater than the total diameter of the plurality of sets of directional air-jet nozzles connected with the distribution controller and the controller for HPCA automatic intermittent burst jet acceleration of the wind-air engine respectively; order to make the impellers of the wind-air engine be directionally started and accelerated to operate to generate power, the present invention adopts a design that the plurality of sets of directional air-jet nozzles is connected with the distributor and the controller for HPCA start and acceleration of the wind-air engine; in addition, the plurality of sets of directional air-jet nozzles is connected with the distribution controller and the controller for HPCA automatic intermittent burst jet acceleration of the wind-air engine, such that directional air-jet function is achieved.

8. The wind-air engine as claimed in claim 1, wherein the controller for HPCA automatic intermittent burst jet acceleration of the wind-air engine, in order to overcome or reduce the frictional resistance between the valve stem heads of the cam shafts and the cam valve set connected with the distribution controller and the controller for HPCA automatic intermittent burst jet acceleration of the wind-air engine , and the cams of the cam shafts and the cam valve set connected with the distribution controller and the controller for HPCA automatic intermittent burst jet acceleration of the wind-air engine when the cams of the cam shafts and the cam valve set connected with the distribution controller and the controller for HPCA automatic intermittent burst jet acceleration of the wind-air engine operate to open or close the valves of the cam shafts and the cam valve set, the present invention adds sliding balls to the valve stem heads of the cam shafts and the cam valve set connected with the distribution controller and the controller for HPCA automatic intermittent burst jet acceleration of the wind-air engine; in order to make the sliding balls at the valve stem heads of the cam shafts and the cam valve set connected with the distribution controller and the controller for HPCA automatic intermittent burst jet acceleration of the wind-air engine slide freely, the present invention adds a lubrication oil passage on the valve stem heads of the cam shafts and the cam valve set connected with the distribution controller and the controller for HPCA automatic intermittent burst jet acceleration of the wind-air engine, such that lubrication oil in a lubrication oil chamber of the cam shafts and the cam valve set connected with the distribution controller and the controller for HPCA automatic intermittent burst jet acceleration of the wind-air engine flows onto surfaces of the sliding balls at the valve stem heads of the cam shafts and the cam valve set connected with the distribution controller and the controller for HPCA automatic intermittent burst jet acceleration of the wind-air engine through the lubrication passage, so as to realize the lubrication, reduce the frictional resistance, improve the operating speed of the wind-air engine, and generate greater output torque.

9. The wind-air engine as claimed in claim 1, wherein when the motor vehicle equipped with the wind-air engine is decelerated with the deceleration and brake pressurizing device, the inertia power output during deceleration is used to start the high-load HPCA compressor, so as to convert the inertia power before the motor vehicle equipped with the wind-air engine is decelerated and braked into a pressurizing function for generating regeneration HPCA, such that the HPCA consumed when the motor vehicle equipped with the wind-air engine is decelerated, braked, stopped and restarted balances with the quantity of the converted and regeneration HPCA from the inertia power output when the motor vehicle equipped with the wind-air engine moves at a certain speed; thus, the feature of the rated quantity of the HPCA required when restarting the motor vehicle equipped with the wind-air engine is achieved; the brake disk internal gear transmission mechanism of the brake of the deceleration and brake pressurizing device of the motor vehicle equipped with the wind-air engine transmits and starts the high-load HPCA compressor to work, at the mean time generating the regeneration HPCA for reuse by pressurizing, mechanical resistance when the high-load HPCA compressor starts to work acts back on the brake disk internal gear transmission mechanism of the deceleration and brake pressurizing device of the motor vehicle equipped with the wind-air engine, so as to realize the deceleration and brake; inertia braking force before the motor vehicle equipped with the wind-air engine needs to be decelerated, braked and stopped is output when the clutch driven disk and the clutch driving disk of the deceleration and brake pressurizing device of the motor vehicle equipped with the wind-air engine are combined, so as to decelerate, brake, and stop the vehicle, and realize the pressurization function to generate the regeneration HPCA for reuse; the clutch driven disk and the clutch driving disk are separated when the motor vehicle equipped with the wind-air engine moves normally.

10. The wind-air engine as claimed in claim 1, wherein the wind-air engine is installed in the front of the motor vehicle equipped with the wind-air engine at a position where the wind resistance is the greatest; the air tank of the HPCA regeneration, storage and supply system of the wind-air engine is connected with the central controller for HPCA start and acceleration of the wind-air engine; the controller for HPCA start and acceleration and the distributor of the wind-air engine are connected; the controller for HPCA start and acceleration, the distributor and the plurality of sets of air-jet pipes of the wind-air engine are connected; then the controller for HPCA start and acceleration, the distributor and the plurality of sets of directional air-jet nozzles of the wind-air engine are connected; the central controller for HPCA start and acceleration of the wind-air engine is turned on, such that the HPCA stored in the air tank of the HPCA regeneration, storage and supply system of the wind-air engine is jetted from the plurality of sets of directional air-jet nozzles connected with the controller for HPCA start and acceleration and the distributor of the wind-air engine; this starts the operation of the impellers of the wind-air engine, such that the wind-air engine is started and operates to generate power; the power is output from the left impeller main shaft auxiliary power conical gear; the left impeller main shaft auxiliary power conical gear is connected with the conical gear for transmitting the distribution controller connected with the controller for HPCA automatic intermittent burst jet acceleration of the wind-air engine; this starts the cam shafts and the cam valve set connected with the distribution controller and the controller for HPCA automatic intermittent burst jet acceleration of the wind-air engine to operate; meanwhile, the central controller for HPCA automatic intermittent burst jet acceleration of the wind-air engine is turned on, such that the HPCA stored in the air tank of the HPCA regeneration, storage and supply system of the wind-air engine is jetted; it passes through the distribution controller connected with the controller for HPCA automatic intermittent burst jet acceleration of the wind-air engine, passes through the plurality of sets of air-jet pipes connected with the distribution controller and the controller for HPCA automatic intermittent burst jet acceleration of the wind-air engine, and then passes through the plurality of sets of directional air-jet nozzles connected with the distribution controller and the controller for HPCA automatic intermittent burst jet acceleration of the wind-air engine; then, the cam shafts and the cam valve set connected with the distribution controller and the controller for HPCA automatic intermittent burst jet acceleration of the wind-air engine operate to control the automatic intermittent burst and jet airflow generated when the valves are opened or closed; the airflow is jetted from the plurality of sets of directional air-jet nozzles connected with the distribution controller and the controller for HPCA automatic intermittent burst jet acceleration of the wind-air engine, so as to drive the impellers of the wind-air engine to be accelerated to operate to generate power; the power is output from the right impeller main shaft auxiliary power conical gear of the wind-air engine, the right impeller main shaft auxiliary power conical gear is connected with and starts the conical gear for transmitting the HPCA compressor of the HPCA regeneration, storage and supply system of the wind-air engine; this starts the HPCA compressor of the started HPCA regeneration, storage and supply system of the wind-air engine to operate to generate the regeneration HPCA; the regeneration HPCA is supplied to the wind-air engine for recycling, such that the wind-air engine runs continuously to generate power output, and drives the motor vehicle equipped with the wind-air engine to move; the wind force and wind resistance generated, when the motor vehicle equipped with the wind-air engine is moving at a speed, enter from the outer edge of the directional trunk inlet of the wind-air engine which is installed in the front of the motor vehicle equipped with the wind-air engine at a position where the wind resistance is the greatest, and pass through the inner edge of the directional trunk inlet which is 1-30 times smaller than the outer edge of the directional trunk inlet, such that the wind resistance airflow drives the impellers of the wind-air engine to operate to generate power; the power is output from the central main power gear box of the wind-air engine, the central main power gear box is connected with a drive bridge of the motor vehicle equipped with the wind-air engine; the drive bridge is then connected with a half-axle of the drive bridge of the motor vehicle equipped with the wind-air engine, so as to transmit the power to tires of the motor vehicle equipped with the wind-air engine; then, the motor vehicle equipped with the wind-air engine moves; when the motor vehicle equipped with the wind-air engine needs to be decelerated, the tires of the motor vehicle equipped with the wind-air engine are used to transmit the inertia power of the motor vehicle equipped with the wind-air engine before it is decelerated through the brake disk internal gear transmission mechanism of the brake of the deceleration and brake pressurizing device of the wind-air engine, and the inertia power of the motor vehicle equipped with the wind-air engine prior to its deceleration is output by the deceleration and brake pressurizing device of the wind-air engine; the deceleration and brake pressurizing device of the motor vehicle equipped with the wind-air engine is connected with the high-load air compressor, so as to start the high-load air compressor to operate to generate the regeneration HPCA; the regeneration HPCA is transmitted by the HPCA pipe connected with the high-load air compressor and the deceleration and brake pressurizing device of the motor vehicle equipped with the wind-air engine to be stored in the air tank of the HPCA regeneration, storage and supply system of the wind-air engine, such that the HPCA is recycled when the wind-air engine is started and accelerated.
